(19)

**Europäisches Patentamt**
**European Patent Office**
**Office européen des brevets**

(11) **EP 2 175 611 A1**

(12) **EUROPEAN PATENT APPLICATION**
published in accordance with Art. 153(4) EPC

(43) Date of publication:
**14.04.2010 Bulletin 2010/15**

(21) Application number: **09714434.9**

(22) Date of filing: **06.02.2009**

(51) Int Cl.:
***H04L 29/08*** *(2006.01)*

(86) International application number:
**PCT/CN2009/070377**

(87) International publication number:
**WO 2009/105975 (03.09.2009 Gazette 2009/36)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.02.2008 CN 200810065727**

(71) Applicant: **Huawei Technologies Co., Ltd.**
**Longgang District**
**Shenzhen**
**Guangdong 518129 (CN)**

(72) Inventors:
• **SHI, Xiaomin**
  **Longgang District**
  **Shenzhen 518129 (CN)**
• **LI, Yan**
  **Longgang District**
  **Shenzhen 518129 (CN)**

• **GU, Ning**
  **Longgang District**
  **Shenzhen 518129 (CN)**
• **LIU, Tiejiang**
  **Longgang District**
  **Shenzhen 518129 (CN)**
• **ZHOU, Shuhui**
  **Longgang District**
  **Shenzhen 518129 (CN)**
• **GU, Qing**
  **Longgang District**
  **Shenzhen 518129 (CN)**
• **ZHU, Yiwen**
  **Longgang District**
  **Shenzhen 518129 (CN)**

(74) Representative: **Kreuz, Georg Maria et al**
**Huawei Technologies**
**Riesstrasse 25**
**80992 München (DE)**

(54) **CONVERSION METHOD AND APPLICATION SERVER OF COMPOSITE SCHEME OF WEB SERVICE**

(57) A method for converting a web service composition logic and an application server are disclosed herein. The method includes: obtaining the first BPEL process framework of the existing BPEL composition logic; generating a DAG composition logic according to the first BPEL process framework; obtaining an independent path group according to the DAG composition logic; analyzing the independent path grouping result to generate the second BPEL process framework; and filling the process of the second BPEL process framework to generate an executable process. An application server is provided to convert the web service composition logic. The method and the application server provided herein optimize the logic through parallelism or nesting of web service invocation, and improve the execution efficiency.

FIG.6

EP 2 175 611 A1

**Description**

This application claims priority to Chinese Patent Application No. 200810065727.2, filed with the Chinese Patent Office on February 27, 2008 and entitled "Method for Converting Web Service Composition Logic and Application Server", which is hereby incorporated by reference in its entirety.

FIELD OF THE INVENTION

The present invention relates to web services, and in particular, to a method and an application server for converting a web service composition logic.

BACKGROUND

Web Service (WS) composition is divided into three types: manual composition, semi-automatic composition, and automatic composition. Manual composition is to generate a web service execution process manually through a graph or text edit interface, and submit it to the process execution engine. Some service composition systems provide graphic user interfaces. A user uses a User Interface (UI) to construct an execution process through proper web services of Universal Description Discovery and Integration (UDDI). Some service composition systems use a service container to aggregate the web services of the same function in the UDDI, and use a scoring mechanism to select the proper services during operation. The defects of such systems are: When the services in the UDDI accumulate to a certain quantity, it is very difficult to discover or select services, and manual selection increases the workload of the user.

The semi-automatic composition provides semantic proposal about selection of web services in the composition of the user. However, the user still needs to select the web services to be composed from the filtered service list, and connect the selected web services. Although such systems solve some manual composition problems, the user still needs to make manual selection among many services.

Automatic composition well solves the foregoing problem, and generally uses the technologies such as artificial intelligence to select services automatically and generate a service process automatically.

Business Process Execution Language (BPEL) is an executable language for business processes of web services. The BPEL does not execute any detail in the business process, and does not involve storage or processing of business data. The BPEL only controls the invocation of sub-services and controls the process.

The BPEL may be expressed in the following structure:

```
<process name="UserProcess">
<partners> ....</partners>
<variables> .... </variables>
<correlationSets> .... </correlationSets>
<faultHandlers> .... </faultHandlers>
<compensationHandler> .... </compensationHandler>
<eventHandlers> .... </eventHandlers>
<sequence> .... </sequence>
</process>
```

Each process begins with <process>, and defines a process name and a name space. <partners> defines the external web services invoked by the process. <variables> defines the data used in the process. Such data is the input and output based on web services. The primary tag is <sequence>, which defines the execution structure of the process. In this segment, Structured Activities and Primitive Activities may be defined. Primitive activities may be nested in structured activities. Structured activities include: <sequence> (sequential execution), <switch> (branch), <pick> (selectively executing according to conditions), <flow> (parallel execution), and <while> (cycle). Primitive activities include: <invoke> (invoking external web services), <receive> (receiving user input), <reply> (returning the output of the <receive> activities to the user), <assign> (assigning a value to input and output between two processes), <throw> (throwing exception), <terminate> (forcing the business process instance to stop), <wait> (delaying the execution for a fixed time period), <empty> (staying idle), <compensate> (designating a compensation Handler for a scope).

With respect to converting the composition logic into the BPEL composition logic, the prior art converts the finally generated process description into the BPEL mode, but the finally generated process logic executes every sub-service sequentially, without parallel execution <flow> or branch execution <switch>.

A Web services TO BPEL (WTOP) algorithm is put forward, namely, the web service composition logic is converted to BPEL automatically. The conception of the WTOP is to divide the composition logic hierarchically, and traverse layer by layer until all nodes are executed. The method is as follows: Find all the nodes whose in-degree is 0 in the current graph; if there is only one such node, output the node directly and delete the node and its relevant edges; if there is more than one node whose in-degree is 0, output all such nodes concurrently through a flow tag, and delete the nodes and relevant edges. This algorithm implements automatic conversion from a Directed Acyclic Graph (DAG) mode to a BPEL mode, and uses a parallel process. However, this algorithm does not support nesting of a parallel process.

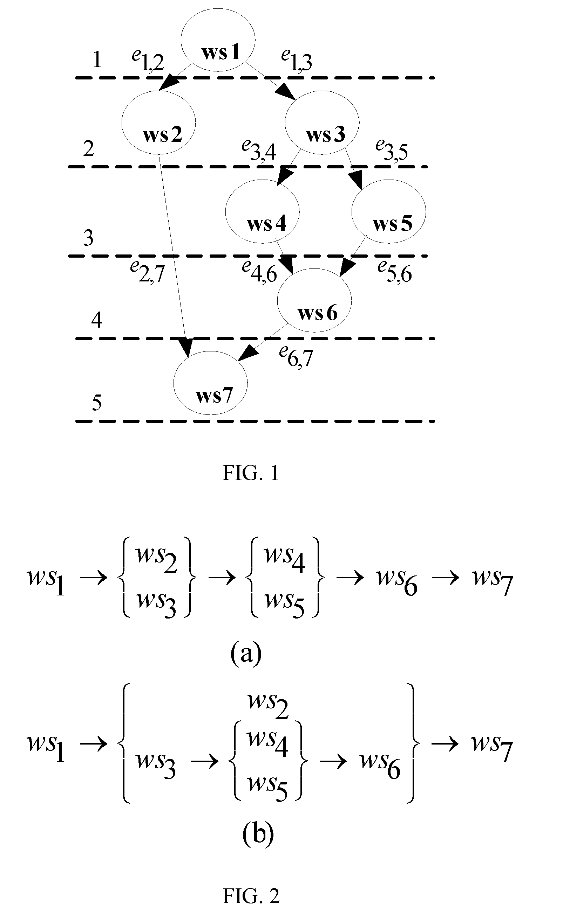

FIG. 1 shows a process of the WTOP algorithm.

This algorithm searches for the nodes whose in-degree is 0, and traverse hierarchically. The output of the algorithm is shown in FIG. 2.

At the beginning, $ws_1$ is the only node whose in-degree is 0, and is output directly, and then this node and the edges related to it are deleted. Afterward, the search is performed again, and $ws_2$ and $ws_3$ are found as the nodes whose in-degree is 0. In this case, the flow tag is output, and $ws_2$ and $ws_3$ are output as child nodes of the flow tag. The operation is repeated until all nodes are finished.

The result of the WTOP algorithm is shown in FIG. 2(a). In fact, the output of this DAG ought to be shown in FIG. 2(b), namely, nodes $ws_3$, $ws_4$, $ws_5$, and $ws_6$ are executed concurrently with $ws_2$, and nodes $ws_4$ and $ws_5$ are Nested parallel sub-processes inside the processes of $ws_3$, $ws_4$, $ws_5$, $ws_6$ processes. According to the instance, the problems brought by non-support of nesting are evident.

It is assumed that the execution time of $ws_2$ is 1000s, the execution time of any of nodes $ws_3$, $ws_4$, $ws_5$, and $ws_6$ is 300s, the execution time of $ws_1$ is 100s, and the execution time of $ws_7$ is 100s. The execution time of the parallel process is calculated according to the sub-path whose execution time is the greatest. Therefore, the execution time of synthesizing services is calculated according to the WTOP algorithm in FIG. 2(a), and calculation result is t1 + Max(t2, t3) + Max(t4, t5) + t6 + t7 = 100 + 1000 + 300 + 300 + 100 = 1800s. If the calculation is based on FIG. 2(b), the calculation result is t1 + Max(t2, (t3 + Max(t4, t5) + t6)) + t7 = 100 + 1000 + 100 = 1200s. This reveals the impact on the execution time caused by non-support of the nested parallel process in the WTOP algorithm.

The prior art has the following defects: The composition logic expressed in the BPEL mode keeps unchanged once it is specified, and the BPEL engine invokes the web service sequentially. In this case, it is impossible to optimize the invocation proactively according to the actual several web services suitable for parallel or nested invocation.

SUMMARY

The present invention provides a method and an application server for converting the web service composition logic.

As a first aspect of the invention, the method for converting a web service composition logic includes:

    obtaining a first process of the composition logic of the web service;
    generating a framework process according to the first process of the composition logic of the web service; and
    generating the second process of the composition logic of the web service according to the framework process.

As a second aspect of the invention, the method for converting a BPEL composition logic of web services includes:

    obtaining the process of the BPEL composition logic of web services; and
    generating a framework process according to the process of the BPEL composition logic of web services.

As a third aspect of the invention, the method for converting a DAG composition logic of web services includes:

    obtaining independent path groups according to the DAG composition logic;
    analyzing and processing the independent path groups to generate a second framework process of the composition logic of the web service; and
    filling the second framework process of the composition logic of the web service to generate the second process of the composition logic of the web service.

As a fourth aspect of the invention, in a first implementation form the application server includes a central processor, and the application server further includes:

    a process retrieving unit, adapted to retrieve the first process of the composition logic of the web service from the existing web service composition logic;
    a process processing unit, adapted to generate a framework process according to the first process of the composition logic of the web service obtained by the process retrieving unit; and
    a process generating unit, adapted to perform operations according to the framework process generated by the process processing unit, and generate the second process of the composition logic of the web service.

According to said fourth aspect of the invention, in a second implementation form the application server includes a central processor, and further includes:

a process retrieving unit, adapted to retrieve the process of the composition logic of the existing web service; and a process processing unit, adapted to generate a framework process according to the process of the composition logic of the web service.

According to said fourth aspect of the invention, in a third implementation form the application server includes a central processor, and further includes:

a path grouping unit, adapted to group the paths according to a DAG framework process;
a process generating unit, adapted to analyze the DAG framework process to generate a framework process of the composition logic of the web service; and
a process filling unit, adapted to fill the framework process of the composition logic of the web service to generate the process of the composition logic of the web service.

Compared with the conventional technologies, the present invention brings about at least the following benefits:

The logic execution can be optimized according to parallelism or nesting of web service invocation after the DAG logic is generated and mapped on the basis of the existing process of the composition logic expressed in the BPEL mode, thus improving the execution efficiency and accomplishing conversion from a complex composition logic to a BPEL composition logic.

BRIEF DESCRIPTION OF THE DRAWINGS

FIG. 1 is a flow chart of a WTOP algorithm;
FIG. 2a is an output result in the scenario that the WTOP algorithm does not support nested parallelism;
FIG. 2b is an output result in the scenario that the WTOP algorithm supports nested parallelism;
FIG. 3 is a graphical representation of a DAG composition logic;
FIG. 4 is a flow chart of the first embodiment of the present invention;
FIG. 5 is a flow chart of the second embodiment of the present invention;
FIG. 6 is a flow chart of the third embodiment of the present invention;
FIG. 7 is a graphical schematic diagram of conversion from a BPEL composition logic to a DAG composition logic according to the third embodiment of the present invention;
FIG. 8 is a schematic diagram of an independent path group according to the third embodiment of the present invention;
FIG. 9 is a system schematic structure diagram of the fourth embodiment of the present invention;
FIG. 10 is a system schematic structure diagram of the fifth embodiment of the present invention; and
FIG. 11 is a system schematic structure diagram of the sixth embodiment of the present invention.

DETAILED DESCRIPTION OF THE INVENTION

In order to make the technical solution, objectives and merits of the present invention clearer, the present invention is hereinafter described in detail by reference to accompanying drawings and exemplary embodiments.

***Embodiment 1***

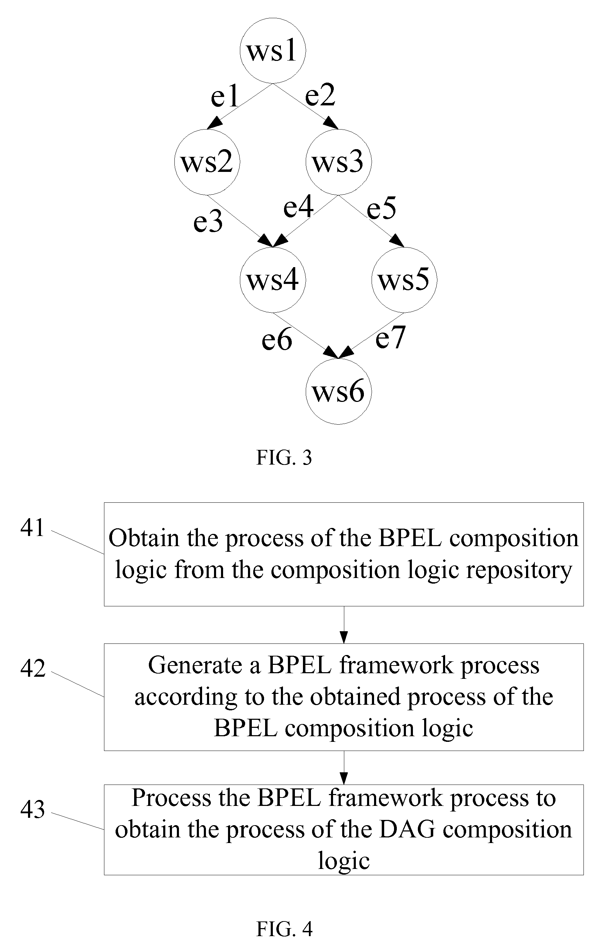

This embodiment is about conversion from the process of the BPEL composition logic to the process of the DAG composition logic, as shown in FIG. 4.
Step 41: Obtain the process of the BPEL composition logic from the composition logic repository.
Step 42: Generate a BPEL framework process according to the obtained process of the BPEL composition logic.
Retrieve the process-related information from the BPEL script in a certain mode, for example, extensible Markup Language (XML) parser, Xpath query method, or in other modes well known to those skilled in the art. The process-related information includes the Sequence operation, Flow operation, and the source (from) and destination (to) attributes in assign operation. Such information is combined into a BPEL framework process. At the same time, obtain the non-process information (variable definition, role definition, and so on) other than the information required by the framework process.

For example, a BPEL framework process is as follows:

```
<process xmlns="http://schemas.xmlsoap.org/ws/2003/03/business-process/">
<sequence>
    <assign>
        <from variable="userRequest" part="ws1in"/>
        <to variable="ws1n"/>
    </assign>
</sequence>
</process>
```

Step 43: Process the BPEL framework process to obtain the process of the DAG composition logic.

The DAG composition logic is to describe the multiple web services and the relations between them according to a general descriptive mode. A converted DAG composition logic may be represented in several modes, generally including graphical representation and datasheet representation.

The graphical representation of a composition logic is shown in FIG. 3. The composition logic obtained by the web service composition engine is represented in the DAG mode. Each node denotes operations of a web service. An edge denotes the output of the previous web service and the input of the next web service and depicts the execution dependency and data dependency between web services.

The DAG composition logic is expressed in a datasheet in the following mode:

Each operation of a web service is defined as a DAG node. If a web service includes multiple operations, the multiple operations of the web service are defined as different nodes, namely, treat the web service as multiple web services, each of which has only one operation.

Define the output of the previous web service and the input of next web service as an edge of a DAG-related node, and mark the predecessor node set (namely, execution dependence) and data dependence of the node.

Table 1 is a datasheet representation of the DAG composition logic represented graphically in FIG. 3:

**Table 1 Composition logic represented in a datasheet**

| Serial No. | Node | Predecessor Node Set | Data Dependence |
|---|---|---|---|
| 1 | ws1 | Pred<NULL> | Relay<NULL> |
| 2 | ws2 | Pred <ws1> | Relay <e1> |
| 3 | ws3 | Pred <ws1 | Relay <e2> |
| 4 | ws4 | Pred <ws2, ws3> | Relay <e3, e4> |
| 5 | ws5 | Pred <ws3> | Relay <e5> |
| 6 | ws6 | Pred <ws4, ws5> | Relay <e6, e7> |

Concept 1: A web service composition logic is a DAG graph G = (V, E), and the composition logic G can be uniquely identified by, the vectors V and E, where:

$$\text{Node } V = \{\text{an operation } ws_i \text{ in the web services}\};$$

the edge E is a subset of the ordered product $V \times V$, $E = \{e_{i,j} \mid e_{i,j} = ws_i \rightarrow ws_j\}$, where $e_{i,j}$ is a directional edge pointed from node $ws_i$ to $ws_j$, and indicates relevance between $ws_i$ and $ws_j$.

As shown in FIG. 1, $e_{3,5} = ws_3 \rightarrow ws_5$, and edge $e_{3,5}$ indicates that the output of $ws_3$ is the input of $ws_5$.

Concept 2: Predecessor node set of the node: $pred(ws_i) = \{ws_j \mid e_{j,i} \in E\}$.

In FIG. 1, the predecessor nodes of $ws_6$ are $\{ws_4, ws_5\}$.

Concept 3: Execution dependence: $ws_i$ is executable only after $pred(ws_i)$ finishes executing, namely, a node need to wait for all predecessor nodes to finish executing so as to be executable.

Concept 4: Data dependence: If an edge $e_{i,j}$ exists between $ws_i$ and $ws_j$, data dependence exists between $ws_i$ and $ws_j$. It indicates that an output of $ws_i$ flows into an input of $ws_j$. The detailed processing may be as follows:

judge the source (from) attribute and the destination (to) attribute of each <assign> element in the BPEL framework process;
for the "from" attribute, if "from" is input by the user, mark the "from" as NULL; if "from" is not input by the user and is not in the DAG description, add the "from" attribute into the DAG description, and record the "parent" of "from" as NULL; if "from" is in the DAG description, go on to judge the "to" attribute;
for the "to" attribute, if "to" is not in the DAG description, add the "to" attribute into the DAG description, and add the "from" attribute into its "parent" attribute; if the "to" attribute is in the DAG description, add the "from" attribute into its "parent" attribute.

Repeat the foregoing process to judge other "from" attributes and "to" attributes. As a result, the DAG description includes the nodes corresponding to all web services, and the whole DAG description is constructed through the parent relation.
According to the whole DAG description, the process of the DAG composition logic may be generated.

***Embodiment 2***

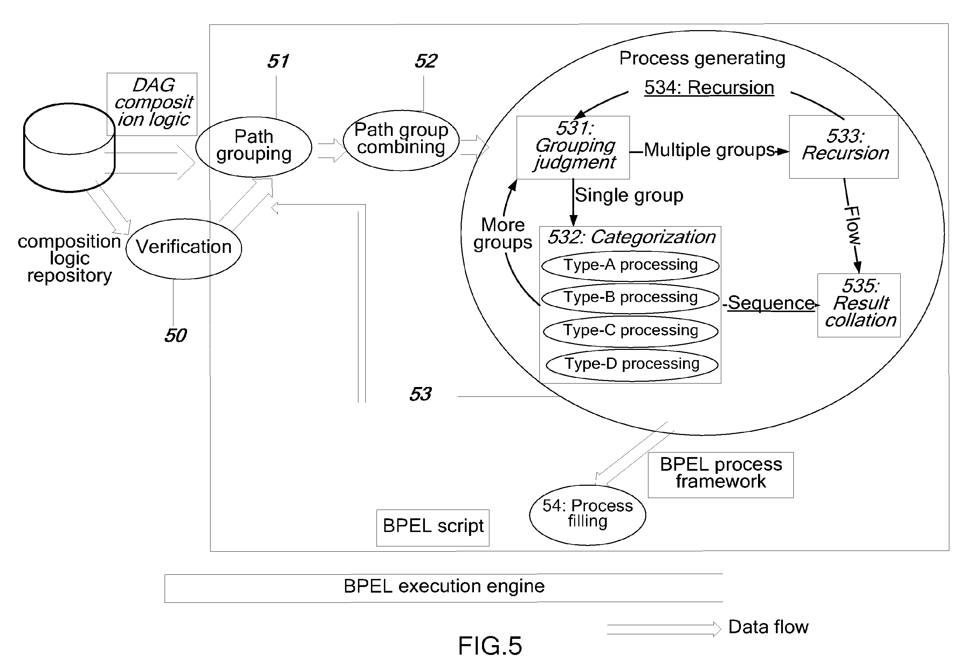

This embodiment is about conversion from a BPEL composition logic to a DAG composition logic, as shown in FIG. 5.
First, obtain the DAG composition logic, which may be obtained from the composition logic storing unit.
Step 50: Verify the obtained DAG composition logic. If the verification succeeds, perform step 51. This step is optional.
The detailed verification method is as follows:

verify whether the composition logic representation is a connected graph: If more than one independent node or node set exist, the verification fails;
check for loops: If the composition logic includes any loop, the verification fails;
check for any node whose in-degree is 0: If the in-degree of no node is 0, it indicates that the DAG is incomplete, and the composition logic verification fails; and
check for any node whose out-degree is 0: If the out-degree of no node is 0, it indicates that the DAG is incomplete, and the composition logic verification fails.

Step 51: The paths of the DAG composition logic verified successfully are grouped.
Several concepts need to be clarified first:

Concept 5: Path dependence: If a node in path A exists in path B, path A is dependent on path B. Path independence: If no node in path A exists in path B, path A is independent of path B.

For example, in FIG. 1, path {2} is independent of path {3-4-6}; path {3-4-6} is dependent on path {3-5-6}.
Concept 6: Independent path group: All dependent paths in a path set constitute an independent path group.
For example, in FIG. 1, path {3-4-6} is dependent on path {3-5-6}, and the two paths constitute an independent path group {{3-4-6}, {3-5-6}}.
Concept 7: If a path $P \in$ path group G, and node N is on the path P, then N is a node in path group G. That is, if $N \in P$ and $P \in G$, then $N \in V(G)$, where $V(G)$ is a set of the nodes on all paths in path group G.
Theorem 1: No dependence exists between independent path groups.
Proof: Supposing that A and B are in different independent path groups and A is dependent on B, then there are $P_1 \in A$ and $P_2 \in B$, where path $P_1$ is dependent on path $P_2$. According to the concept of an independent path group, dependent paths constitute a group, and therefore, $P_1$ and $P_2$ are in the same independent path group, and then A and B are in the same independent path group. That contradicts the assumption that A and B are in different independent path groups.
The path grouping method includes: The depth-first-traversal method is applied to the DAG composition logic to obtain all path groups from the head node to the end node. Those skilled in the art are aware that other methods may be applied in place of the depth-first traversal method to obtain all path groups from the head node to the end node.
Step 52: Combine all dependent path groups, and put all dependent paths into an independent path group until no more path group can be combined. Output the finally obtained independent path groups.
Step 53: Analyze the independent path groups to generate a BPEL framework process, for example, through the following steps:

Step 531: Judge the grouping result of the combined independent path groups.

If the grouping result is only one independent path group, perform 532; if there are more than one independent path group, perform step 533 and step 534.

Step 532: Judge the scenario of the independent path group (there are four modes in total), perform operations according to the corresponding scenario, and output the corresponding sequence information and nodes.

The processing method falls into four scenarios:

(a) If all paths have the same head node and the same end node, output the same head node and the same end node first, and delete the same head node and the same end node in all paths. Perform recursion for the remaining sub-paths and perform step 531 in the process generating method.

(b) If all paths have the same head node but different end nodes, output the same head node first, and delete the same head node in all paths. Perform recursion for the remaining sub-paths and perform step 531 in the process generating method.

(c) If all paths have the same end node but different head nodes, output the same end node first and delete it. Perform recursion for the remaining paths and perform step 531 in the process generating method.

(d) If neither the head node nor the end node is the same, group the nodes hierarchically in light of the WTOP algorithm because neither the parallel process nor the sequential process is applicable to conversion in this circumstance. Afterward, retrieve all head nodes whose in-degree is 0, and output such head nodes to the flow tag description concurrently, indicating concurrent execution of all the services represented by the nodes whose in-degree is 0. Perform recursion for the sub-path set without head nodes, and perform step 531 in the process generating method.

Table 2 shows the results of executing the algorithm in the four scenarios:

**Table 2 Execution results of four modes**

|  | (a) | (b) | (c) | (d) |
|---|---|---|---|---|
| Path in the independent path group | 1-2-4<br>1-3-4 | 1-2-4<br>1-2-5<br>1-3-5 | 1-2-4<br>3-4 | 2-4-8<br>2-5-8<br>3-5-8<br>3-6-7 |
| Execution result | <1><br><recur><br><4> | <1><br><recur> | <recur><br><4> | <flow><br><2><br><3><br></flow><br><recur> |

Step 533 and step 534: If multiple independent path groups exist, output the parallel information for each independent path group, perform recursion, callback and perform 531 for each independent path group.

Step 535: Collate the finally categorized output results (including the sequence information), and output a BPEL framework process.

Step 54: Fill the process.

A BPEL framework process is generated in the process generating stage, and includes the information such as <flow> and <sequence>, and other information needs to be added in order to generate an execute process, including: variable definition, participant definition, and operations.

For example, a BPEL framework process is as follows:

```
<process xmlns="http://schemas.xmlsoap.org/ws/2003/03/business-process/">
<sequence>
    <assign>
        <from variable="userRequest" part="ws1in"/>
        <to variable="ws1in"/>
    </assign>
</sequence>
</process>
```

After the corresponding variables are filled, the generated script is as follows:

```
<process xmlns="http://schemas.xmlsoap.org/ws/2003/03/business-process/">
<variables>
    <variable name="userRequest" messageType="tns:userRequest"/>
    <variable name="userResponse" messageType="tns:userResponse"/>
</variables>
<partners>
    <partner name="User" serviceLinkType="tns:UserSLT" myRole="UserProvider"/>
    <partner name="ws1" serviceLinkType="ws1LT" partnerRole="ws1PR"/>
</partners>
<sequence>
    <assign>
        <copy>
            <from variable="userRequest" part="ws1in"/>
            <to variable="ws1in"/>
        </copy>
    </assign>
    <invoke name="1" partner="ws1" portType="ws1PT" operation="ws1OP"
inputVariable="ws1in" outputVariable="ws1out"/>
</sequence>
</process>
```

## Embodiment 3

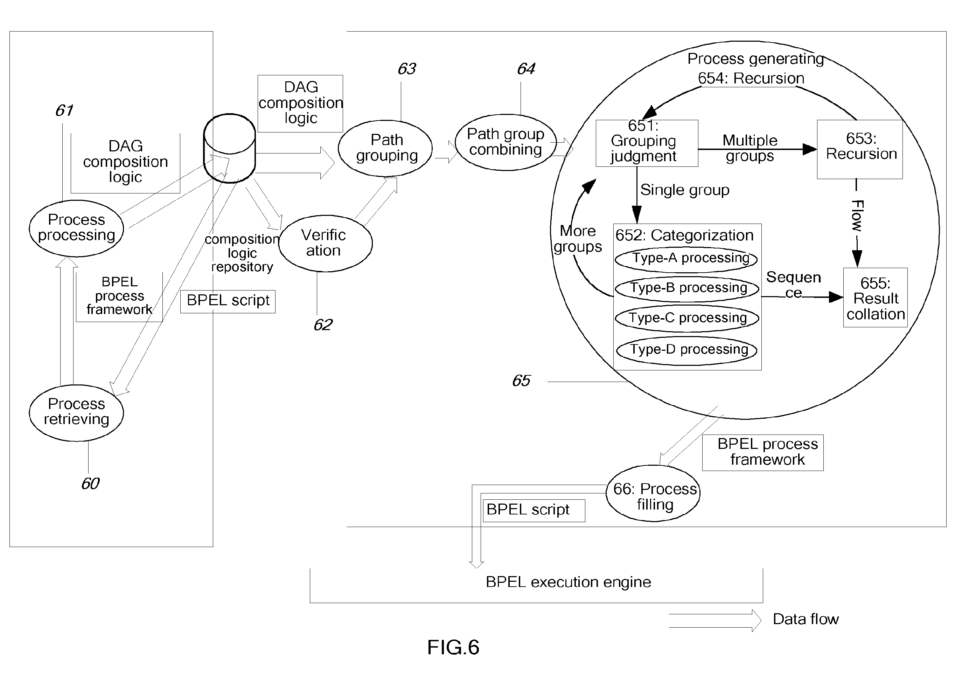

As shown in FIG. 6, this embodiment describes how to optimize an executable BPEL composition logic with respect to parallelism and nesting of multiple web services through generating and mapping of a DAG logic.

This embodiment descries the execution of this system, taking an executable BPEL composition logic as an example.

The BPEL composition logic is expressed as follows:

```
<?xml version="1.0" encoding="UTF-8"?>
<process xmlns="http://schemas.xmlsoap.org/ws/2003/03/business-process/">
<variables>
    <variable name="userRequest" messageType="tns:userRequest"/>
    <variable name="userResponse" messageType="tns:userResponse"/>
    <variable name="ws1in" messageType="ws1intype"/>
    <variable name="ws2in" messageType="ws2intype"/>
    <variable name="ws3in" messageType="ws3intype"/>
    <variable name="ws4in" messageType="ws4intype"/>
    <variable name="ws5in" messageType="ws5intype"/>
    <variable name="ws6in" messageType="ws6intype"/>
    <variable name="ws7in1" messageType="ws7in1type"/>
    <variable name="ws7in2" messageType="ws7in2type"/>
    <variable name="ws8in1" messageType="ws8in1type"/>
    <variable name="ws8in2" messageType="ws8in2type"/>
    <variable name="ws1out" messageType="ws1outtype"/>
    <variable name="ws2out" messageType="ws2outtype"/>
    <variable name="ws3out" messageType="ws3outtype"/>
    <variable name="ws4out" messageType="ws4outtype"/>
    <variable name="ws5out" messageType="ws5outtype"/>
    <variable name="ws6out" messageType="ws6outtype"/>
    <variable name="ws7out" messageType="ws7outtype"/>
    <variable name="ws8out" messageType="ws8outtype"/>
</variables>
<partners>
    <partner name="User" serviceLinkType="tns:UserSLT" myRole="UserProvider"/>
    <partner name="ws1" serviceLinkType="ws1LT" partnerRole="ws1PR"/>
    <partner name="ws2" serviceLinkType="ws2LT" partnerRole="ws2PR"/>
    <partner name="ws3" serviceLinkType="ws3LT" partnerRole="ws3PR"/>
    <partner name="ws4" serviceLinkType="ws4LT" partnerRole="ws4PR"/>
    <partner name="ws5" serviceLinkType="ws5LT" partnerRole="ws5PR"/>
    <partner name="ws6" serviceLinkType="ws6LT" partnerRole="ws6PR"/>
    <partner name="ws7" serviceLinkType="ws7LT" partnerRole="ws7PR"/>
```

```
        <partner name="ws8" serviceLinkType="ws8LT" partnerRole="ws8PR"/>
    </partners>
    <sequence>
        <assign>
            <copy>
                <from variable="userRequest" part="ws1in"/>
                <to variable="ws1in"/>
            </copy>
        </assign>
        <invoke name="1" partner="ws1" portType="ws1PT" operation="ws1OP"
inputVariable="ws1in" outputVariable="ws1out"/>
    </sequence>
    <sequence>
        <assign>
            <copy>
                <from variable="ws1out" part="ws1out"/>
                <to variable="ws2in"/>
            </copy>
        </assign>
        <invoke name="2" partner="ws2" portType="ws2PT" operation="ws2OP"
inputVariable="ws2in" outputVariable="ws2out"/>
    </sequence>
    <sequence>
        <assign>
            <copy>
                <from variable="ws2out" part="ws2out"/>
                <to variable="ws3in"/>
            </copy>
        </assign>
        <invoke name="3" partner="ws3" portType="ws3PT" operation="ws3OP"
inputVariable="ws3in" outputVariable="ws3out"/>
    </sequence>
    <sequence>
        <assign>
            <copy>
                <from variable="ws1out" part="ws1out"/>
                <to variable="ws4in"/>
            </copy>
        </assign>
        <invoke name="4" partner="ws4" portType="ws4PT" operation="ws4OP"
inputVariable="ws4in" outputVariable="ws4out"/>
    </sequence>
    <sequence>
        <assign>
            <copy>
                <from variable="ws4out" part="ws4out"/>
                <to variable="ws5in"/>
            </copy>
        </assign>
        <invoke name="5" partner="ws5" portType="ws5PT" operation="ws5OP"
inputVariable="ws5in" outputVariable="ws5out"/>
    </sequence>
    <sequence>
        <assign>
            <copy>
                <from variable="ws4out" part="ws4out"/>
                <to variable="ws6in"/>
            </copy>
        </assign>
        <invoke name="6" partner="ws6" portType="ws6PT" operation="ws6OP"
inputVariable="ws6in" outputVariable="ws6out"/>
    </sequence>
    <sequence>
```

**EP 2 175 611 A1**

```
<assign>
    <copy>
        <from variable="ws5out" part="ws5out"/>
        <to variable="ws7in1"/>
    </copy>
</assign>
<assign>
    <copy>
        <from variable="ws6out" part="ws6out"/>
        <to variable="ws7in2"/>
    </copy>
</assign>
<invoke name="7" partner="ws7" portType="ws7PT" operation="ws7OP"
inputVariable="ws7in1 ws7in2" outputVariable="ws7out"/>
</sequence>
<sequence>
    <assign>
        <copy>
            <from variable="ws3out" part="ws3out"/>
            <to variable="ws8in1"/>
        </copy>
    </assign>
    <assign>
        <copy>
            <from variable="ws7out" part="ws7out"/>
            <to variable="ws8in2"/>
        </copy>
    </assign>
    <invoke name="8" partner="ws8" portType="ws8PT" operation="ws8OP"
inputVariable="ws8in1 ws8in2" outputVariable="ws8out"/>
</sequence>
<sequence>
    <assign>
        <copy>
            <from variable="ws8out" part="ws8out"/>
            <to variable="userResponse" part="ws8out"/>
        </copy>
    </assign>
    <reply name="reply" partner="User" portType="tns:machine-xxPT"
operation="mxx" variable="userResponse"/>
</sequence>
</process>
```

Step 60: Retrieve the process.

The BPEL file is obtained, for example, from the composition logic storing unit in this embodiment. All <assign> elements are obtained through an XML parser. The process-related elements (sequence, flow) are retained. Here other process-unrelated information may also be retrieved. After the retrieving, the whole output of the BPEL framework process is:

```
<process>
<sequence>
    <assign>
        <from variable="userRequest" part="ws1in"/>
        <to variable="ws1in"/>
    </assign>
</sequence>
<sequence>
    <assign>
        <from variable="ws1out" part="ws1out"/>
        <to variable="ws2in"/>
    </assign>
</sequence>
```

**10**

```
<sequence>
    <assign>
        <from variable="ws2out" part="ws2out"/>
        <to variable="ws3in"/>
    </assign>
</sequence>
<sequence>
    <assign>
        <from variable="ws1out" part="ws1out"/>
        <to variable="ws4in"/>
    </assign>
</sequence>
<sequence>
    <assign>
        <from variable="ws4out" part="ws4out"/>
        <to variable="ws5in"/>
    </assign>
</sequence>
<sequence>
    <assign>
        <from variable="ws4out" part="ws4out"/>
        <to variable="ws6in"/>
    </assign>
</sequence>
<sequence>
    <assign>
        <from variable="ws5out" part="ws5out"/>
        <to variable="ws7in1"/>
    </assign>
    <assign>
        <from variable="ws6out" part="ws6out"/>
        <to variable="ws7in2"/>
    </assign>
</sequence>
<sequence>
    <assign>
        <from variable="ws3out" part="ws3out"/>
        <to variable="ws8in1"/>
    </assign>
    <assign>
        <from variable="ws7out" part="ws7out"/>
        <to variable="ws8in2"/>
    </assign>
</sequence>
<sequence>
    <assign>
        <from variable="ws8out" part="ws8out"/>
        <to variable="userResponse" part="ws8out"/>
    </assign>
</sequence>
</process>
```

Step 61: Handle the process.

A general method for handling the process is:

judge the "from" attribute and the "to"> attribute of each <assign> element in the BPEL framework process;
as for the "from" attribute, if "from" is input by the user, mark the "from" as NULL; if "from" is not input by the user and is not in the DAG description, add the "from" attribute into the DAG description, and record the "parent" of "from" as NULL; if "from" is in the DAG description, go on to judge the "to" attribute;
as for the "to" attribute, if "to" is not in the DAG description, add the "to" attribute into the DAG description, and add the "from" attribute into its "parent" attribute; if the "to" attribute is in the DAG description, add the "from" attribute into its "parent" attribute; and

repeat judging other "from" attributes and "to" attributes. As a result, the DAG description includes all the nodes corresponding to the web service, and the whole DAG description is constructed through the parent relation.

According to generated DAG description, a DAG composition logic may be generated.

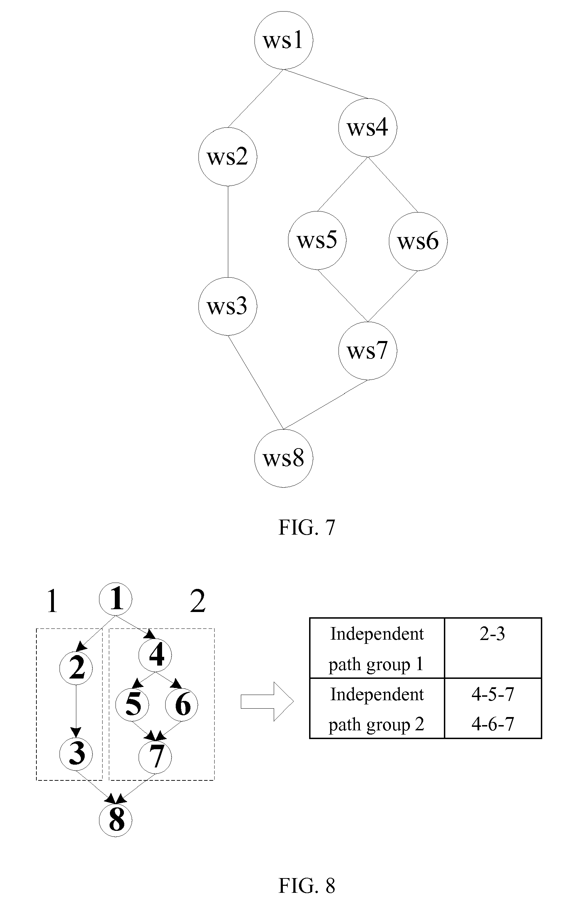

FIG. 7 shows a graphic representation of the DAG composition logic obtained after the process is handled in this embodiment.

Table 4 shows the generated result, taking the datasheet as an example.

**Table 4: Composition logic expressed in a datasheet**

| Serial No. | Node | Predecessor node set | Data dependence |
|---|---|---|---|
| 1 | ws1 | Pred<NULL> | Relay<NULL> |
| 2 | ws2 | Pred <ws1> | Relay <e12> |
| 3 | ws3 | Pred <ws2> | Relay <e23> |
| 4 | ws4 | Pred <ws1> | Relay <e14> |
| 5 | ws5 | Pred <ws4> | Relay <e45> |
| 6 | ws6 | Pred <ws4> | Relay <e46> |
| 7 | ws7 | Pred <ws5, ws6> | Relay <e57, e67> |
| 8 | ws8 | Pred <ws3, ws7> | Relay <e38, e78> |

Step 62: Verify the composition logic.

Retrieve the newly generated DAG composition logic from the composition logic storing environment, and make judgment according to the following principles:

Verify whether the composition logic is represented as a connected graph: if more than one independent node or node set exists, the verification fails.

Check for loops: If the composition logic includes any loop, the verification fails.

Check for any node whose in-degree is 0: If the in-degree of no node is 0, it indicates that the DAG is incomplete, and the composition logic verification fails.

Check for any node whose out-degree is 0: If the out-degree of no node is 0, it indicates that the DAG is incomplete, and the composition logic verification fails.

If the judgment result indicates that the logic meets requirements, go on with the following steps.

Step 63: Group paths.

Group the paths for the DAG composition logic to obtain path groups:

$$Group=\{\{1\text{-}2\text{-}3\text{-}8\}, \{1\text{-}4\text{-}5\text{-}7\text{-}8\}, \{1\text{-}4\text{-}6\text{-}7\text{-}8\}\}.$$

Step 64: Combine the dependent path groups. Put all dependent paths into an independent path group until no more paths are combinable. Output the final independent path groups.

Combine path groups: Combine the dependent path groups in Group={{12-3-8}, {1-4-5-7-8}, {1-4-6-7-8}} to obtain an independent path group: Group={{1-2-3-8}, {1-4-5-7-8}, {1-4-6-7-8}}. The quantity of independent path groups is 1.

Step 65: Generate the process.

The method for generating the process is:

Step 651: Judge the grouping result. If the grouping result is only one independent path group, perform operations according to the mode of the independent path group. If there are multiple independent path groups, output parallel information for each independent path group, mark the independent path group and then analyze and process.

In this embodiment, the only independent path group is Group={{1-2-3-8}, {1-4-5-7-8}, {1-4-6-7-8}} after the combining, and therefore, the process proceeds to step 652.

Step 652: Judge the mode of the independent path group (there are four modes in total), perform operations according to the corresponding scenario, and output the corresponding sequence information and nodes.

The processing method falls into four scenarios:

(a) If all paths have the same head node and the same end node, output the same head node and the same end node first, delete the same head node and the same end node in all the paths, and analyze the remaining sub-paths.
(b) If all paths have the same head node but different end nodes, output the same head node, and delete the same head node in all the paths, and then analyze the remaining sub-paths.
(c) If all paths have the same end node but different head nodes, output the same end node, delete the same end node in all the paths, and then analyze the remaining sub-paths.
(d) If neither the head node nor the end node is the same, group the nodes hierarchically in light of the WTOP algorithm because neither the parallel process nor the sequential process is applicable to conversion in this circumstance. Afterward, retrieve all head nodes whose in-degree is 0, and output such head nodes to the flow tag description concurrently, indicating parallel execution of all the services represented by the nodes whose in-degree is 0. Analyze the sub-path set without head nodes.

Table 5 shows the results of executing the algorithm in the four scenarios:

**Table 5: Execution results of four modes**

|  | (a) | (b) | (c) | (d) |
|---|---|---|---|---|
| Path in the independent path group | 1-2-4<br>1-3-4 | 1-2-4<br>1-2-5<br>1-3-5 | 1-2-4<br>3-4 | 2-4-8<br>2-5-8<br>3-5-8<br>3-6-7 |
| Execution result | <1><br><recur><br><4> | <1><br><recur> | <recur><br><4> | <flow><br><2><br><3><br></flow><br><recur> |

In this embodiment, the processing mode is a (only one head node and one end node), and therefore, mode (a) applies. The output information is:

```
<sequence>
<1>
    <recur>
<8>
</sequence>
```

Because remaining nodes exist after the processing, the process proceeds to step 651; if the remaining nodes are in multiple independent path groups, the process proceeds to step 653 and step 654.

Step 653 and step 654: First, mark the path group of the remaining sub-paths, output parallel information, and perform recursion for the multiple independent path groups to obtain the dependent path group: Group= {{2-3}, {{4-5-7}, {4-6-7}}}. Go back to step 651 to determine that there are 2 independent path groups. Use the parallel process "flow" for describing, as shown in FIG. 8. In FIG. 8, the quantity of paths in the independent path group in the two dotted boxes is Size=1 and Size=2 respectively. Therefore, two scenarios exist: Independent path group 1 includes only one path, and therefore, sequential output is performed directly; independent path 2 includes more than one sub-path, and therefore, recursion is performed for all sub-paths in the group. The results are shown in Table 6:

**Table 6 Execution result of FIG. 8**

|  | Independent path group 1 | Independent path group 2 |
|---|---|---|
| Path in the independent path group | 2-3 | 4-5-7<br>4-6-7 |
| Execution result | <sequence> | <sequence> |

(continued)

|  | Independent path group 1 | Independent path group 2 |
|---|---|---|
|  | <2><br><3><br></sequence> | <recur><br></sequence> |

The two independent path processes are described through a flow tag. The results generated in the process are shown in Table 7.

```
        <flow>
                <sequence>
                        <2>
                        <3>
                </sequence>
                <sequence>
                        <recur>
                </sequence>
        </flow>
```

**Table 7 Parallel process output of the independent path group in FIG. 8**

The whole output is:

```
<sequence>
<ws1/>
<flow>
    <sequence>
        <ws2/>
        <ws3/>
    </sequence>
    <sequence>
        <ws4/>
        <flow>
            <sequence>
                <ws5/>
            </sequence>
            <sequence>
                <ws6/>
            </sequence>
        </flow>
        <ws7/>
    </sequence>
</flow>
<ws8/>
</sequence>
Step 655: Collate the results.
Step 66: Fill the process.
```

Fill the BPEL framework process in step 65 with the non-process information retrieved in step 60, and generate an executable BPEL script.

*Embodiment 4*

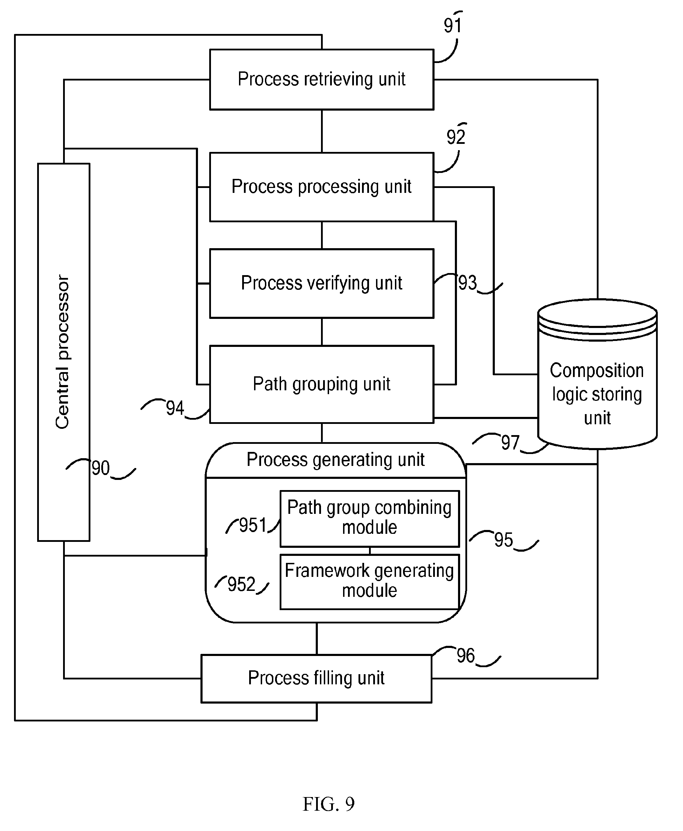

This embodiment provides an application server, as elaborated below by reference to FIG. 9.

The application server includes: a central processor 90, a process retrieving unit 91, a process processing unit 92, a process verifying unit 93, a path grouping unit 94, a process generating unit 95, a process filling unit 96, and a composition logic storing unit 97.

The central processor 90 is adapted to send control signaling to control other units.

The process retrieving unit 91 is adapted to obtain the composition logic from the composition logic storing unit 97. In this embodiment, the obtained composition logic is a BPEL composition logic, and the process retrieving unit 91 may be an XML parser. The XML parser retrieves the process information in the BPEL composition logic. The process information includes the operations such as <sequence>, <flow>, and the source "from" and the destination "to" in the operation <assign>. According to such information, the framework process of the BPEL composition logic may be obtained. Meanwhile, the process retrieving unit 91 may obtain non-process information such as variable definition and role definition. The process retrieving unit 91 may store the framework process of the BPEL composition logic into the composition logic storing unit 97, or, instead of storing, send the framework process directly to the process processing unit 92 and the process filling unit 97 for subsequent processing.

The process processing unit 92 is adapted to obtain the DAG composition logic. The process processing unit 92 obtains the process information and non-process information of BPEL from the process retrieving unit 91 or the composition logic storing unit 97. The detailed operation process is as follows:

The process processing unit 92 judges the "from" attribute and the "to" attribute of each <assign> element in the BPEL process.

For the "from" attribute, if "from" is input by the user, the process processing unit 92 marks the "from" as NULL; if "from" is not input by the user and is not in the DAG description, the process processing unit 92 adds the "from" attribute into the DAG description, and records the "parent" of "from" as NULL; if "from" is in the DAG description, the process processing unit 92 goes on to judge the "to" attribute.

For the "to" attribute, if "to" is not in the DAG description, the process processing unit 92 adds the "to" attribute into the DAG description, and adds the "from" attribute into its "parent" attribute; if the "to" attribute is in the DAG description, the process processing unit 92 adds the "from" attribute into its "parent" attribute.

The process processing unit 92 repeats judging other "from" attributes and "to" attributes. As a result, the DAG description includes all the nodes corresponding to the web services, and the whole DAG description is constructed through the parent relation.

According to the generated DAG description, a DAG composition logic may be generated and stored into the composition logic storing unit 97, or sent to the process verifying unit 93 directly, or sent to the path grouping unit 94 directly.

The process verifying unit 93 is adapted to verify the DAG composition logic generated by the process processing unit 92 and transmit the DAG composition logic to the path grouping unit 94 if the verification succeeds. The process verifying unit 93 may obtain the DAG composition logic for verification from the process processing unit 92 or from the composition logic storing unit 97. The process verifying unit 93 is optional. The DAG composition logic may be sent to the path grouping unit 94 directly for subsequent processing without being verified by the process verifying unit 93.

The detailed verification method is as follows:

The process verifying unit 93 verifies whether the composition logic is represented as a connected graph: If more than one independent node or node set exists, the verification fails.
The process verifying unit 93 checks for loops: If the composition logic includes any loop, the verification fails.
The process verifying unit 93 checks for any node whose in-degree is 0: If the in-degree of no node is 0, it indicates that the DAG is incomplete, and the composition logic verification fails.
The process verifying unit 93 checks for any node whose out-degree is 0: If the out-degree of no node is 0, it indicates that the DAG is incomplete, and the composition logic verification fails. If the verification succeeds, the process verifying unit 93 sends the verified DAG composition logic to the path grouping unit 94.

The path grouping unit 94 is adapted to group the paths for the DAG composition logic. The path grouping unit 94 applies the depth-first-traversal method to the DAG composition logic to obtain all path groups from the head node to the end node. Those skilled in the art are aware that other methods may be applied in place of the depth-first traversal method to obtain all path groups from the head node to the end node.

The process generating unit 95 is adapted to receive the grouping result of the path grouping unit 94, and analyze and handle the result to generate a BPEL framework process.

The process generating unit 95 includes a path group combining module 951 and a framework generating module 952.

The path group combining module 951 combines all dependent paths into one path group according to the path grouping result until no more paths are combinable, and outputs the final independent path groups to the framework generating module 952.

After receiving the combining result from the path group combining module 951, the framework generating module 952 judges the grouping result first. If the grouping result is only one independent path group, the framework generating module 952 performs operations according to the mode of the independent path group, and outputs the corresponding sequence information and nodes. If there are two or more independent path groups, the framework generating module 952 outputs parallel information for each independent path group, marks the independent path group and performs recursion, and then judges the grouping again. According to the grouping judgment result, the analysis in the framework generating module is repeated.

The framework generating module collates the sequence information, node information and parallel information of each independent path group, and outputs a BPEL framework process. After the framework generating module finishes the operations, the BPEL composition logic is converted to a BPEL framework process which supports nesting of parallel processes.

The process filling unit 96 receives the BPEL framework process from the process generating unit 95 or the composition logic storing unit 97, receives the non-process information from the process retrieving unit 91 or the composition logic storing unit 97, fills the BPEL framework process with the non-process information, and generates an executable BPEL script. The executable BPEL script supports generation of nested parallel processes on the basis of retaining the data dependency and execution dependency of the original composition logic.

The composition logic storing unit 97 is adapted to store the BPEL composition logic, the DAG composition logic, the BPEL framework process generated by the process retrieving unit 91, and other non-process information. The composition logic storing unit is optional on the application server, and may be independent of the application server.

### Embodiment 5

This embodiment provides an application server, which converts a BPEL composition logic into a DAG composition logic.

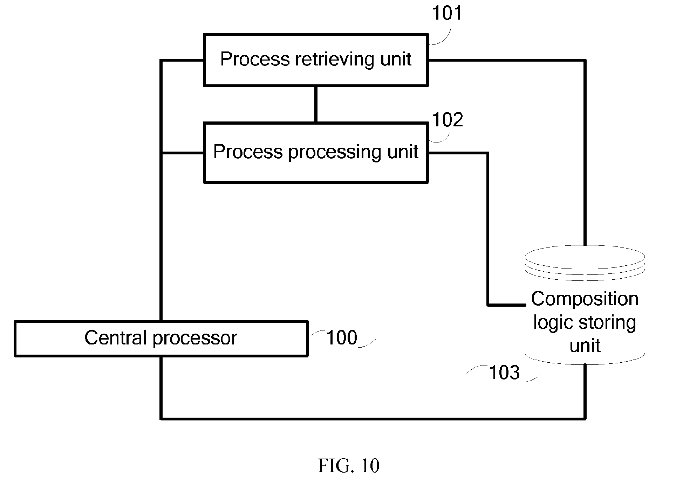

As shown in FIG. 10, the application server includes: a central processor 100, a process retrieving unit 101, a process processing unit 102, and a composition logic storing unit 103.

The central processor 100 is adapted to send control signaling to control other units.

The process retrieving unit 101 is adapted to obtain the composition logic from the composition logic storing unit 103. In this embodiment, the obtained composition logic is a BPEL composition logic, and the process retrieving unit 101 may be an XML parser. The XML parser retrieves the process information in the BPEL composition logic. The process information includes the operations such as <sequence>, <flow>, and the source "from" and the destination "to" in the operation <assign>. According to such information, the framework process of the BPEL composition logic may be obtained. Meanwhile, the process retrieving unit 101 may obtain non-process information such as variable definition and role definition. The process retrieving unit 101 may store the framework process of the BPEL composition logic into the composition logic storing unit 103, or, instead of storing, send the framework process to the process processing unit 102 directly for subsequent processing.

The process processing unit 102 is adapted to obtain the DAG composition logic. The process processing unit 102 obtains the framework process and non-process information of BPEL from the process retrieving unit 101 or the composition logic storing unit 103. The detailed operation process is as follows:

The process processing unit 102 judges the "from" attribute and the "to" attribute of each <assign> element in the BPEL framework process.

For the "from" attribute, if "from" is input by the user, the process processing unit 102 marks the "from" as NULL; if "from" is not input by the user and is not in the DAG description, the process processing unit 102 adds the "from" attribute into the DAG description, and records the "parent" of "from" as NULL; if "from" is in the DAG description, the process processing unit 102 goes on to judge the "to" attribute.

For the "to" attribute, if "to" is not in the DAG description, the process processing unit 102 adds the "to" attribute into the DAG description, and adds the "from" attribute into its "parent" attribute; if the "to" attribute is in the DAG description, the process processing unit 102 adds the "from" attribute into its "parent" attribute.

The process processing unit 102 repeats judging other "from" attributes and "to" attributes. As a result, the DAG description includes all the nodes corresponding to the web services, and the whole DAG description is constructed through the parent relation.

According to generated DAG description, a DAG composition logic may be obtained and stored into the composition logic storing unit 103.

The composition logic storing unit 103 is adapted to store the BPEL executable script, the BPEL framework process generated by the process retrieving unit 91, other non-process information and the DAG composition logic.

Embodiment 6

This embodiment provides an application server, which converts a DAG composition logic into an executable BPEL script.

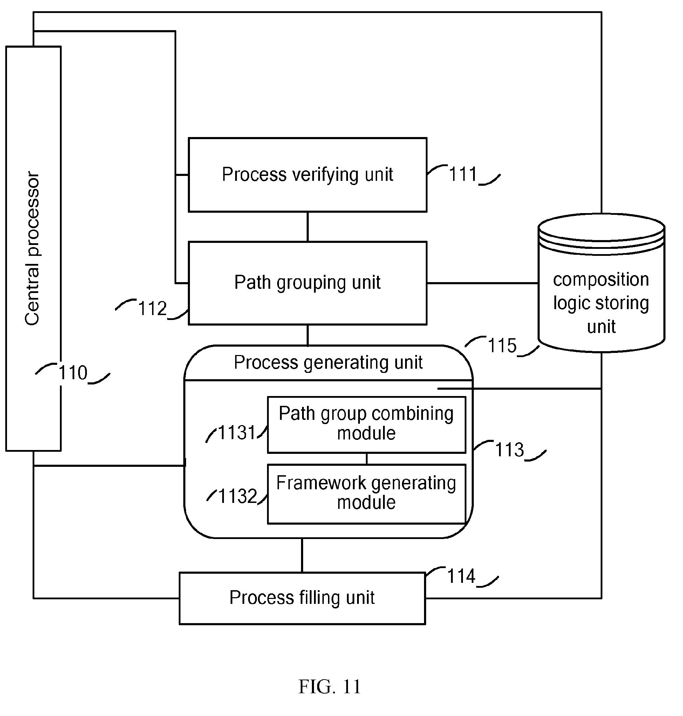

As shown in FIG. 11, the application server includes: a central processor 110, a process verifying unit 111, a path grouping unit 112, a process generating unit 113, a process filling unit 114, and a composition logic storing unit 115.

The central processor 110 is adapted to send control signaling to control other units.

The process verifying unit 111 is adapted to: obtain the DAG composition logic from the composition logic storing unit 115 and verify the logic; and transmit the DAG composition logic to the path grouping unit 112 if the verification succeeds. The process verifying unit 111 is optional. The DAG composition logic may be sent to the process grouping unit 112 directly for subsequent processing without being verified by the process verifying unit 111.

The detailed verification method is as follows:

The process verifying unit 111 verifies whether the composition logic is expressed as a connected graph: If more than one independent node or node set exists, the verification fails.

The process verifying unit 111 checks for loops: If the composition logic includes any loop, the verification fails.

The process verifying unit 111 checks for any node whose in-degree is 0: If the in-degree of no node is 0, it indicates that the DAG is incomplete, and the composition logic verification fails.

The process verifying unit 111 checks for any node whose out-degree is 0: If the out-degree of no node is 0, it indicates that the DAG is incomplete, and the composition logic verification fails. If the verification succeeds, the process verifying unit 111 sends the verified DAG composition logic to the path grouping unit 112.

The path grouping unit 112 is adapted to group the paths for the DAG composition logic. The path grouping unit 112 applies the depth-first-traversal method to the DAG composition logic to obtain all path groups from the head node to the end node. Those skilled in the art are aware that other methods may be applied in place of the depth-first traversal method to obtain all path groups from the head node to the end node.

The process generating unit 113 is adapted to receive the grouping result of the path grouping unit 112, and analyze and handle the result to generate a BPEL framework process.

The process generating unit 113 includes a path group combining module 1131 and a framework generating module 1132.

The path group combining module 1131 combines all dependent paths into one path group according to the path grouping result until no more paths are combinable, and outputs the final independent path groups to the framework generating module 1132.

After receiving the combining result from the path group combining module 1132, the framework generating module 1131 judges the grouping result first. If the grouping result is only one independent path group, the framework generating module performs operations according to the mode of the independent path group, and outputs the corresponding sequence information and nodes. If there are two or more independent path groups, the framework generating module outputs parallel information for each independent path group, marks the independent path group and performs recursion, and then judges the grouping again. According to the grouping judgment result, the analysis in the framework generating module is repeated.

The framework generating module collates the sequence information, node information and parallel information of each independent path group, and outputs a BPEL framework process. After the framework generating module finishes the operations, the BPEL composition logic is converted to a BPEL framework process which supports nesting of parallel processes.

The process filling unit 114 receives the BPEL framework process from the process generating unit 113 or the composition logic storing unit, receives the non-process information from the process retrieving unit, fills the BPEL framework process with the non-process information, and generates an executable BPEL script. The executable BPEL script supports generation of nested parallel processes on the basis of retaining the data dependency and execution dependency of the original composition logic.

The composition logic storing unit 115 is adapted to store the DAG composition logic, the BPEL framework process generated by the process retrieving unit 91, other non-process information, and the executable BPEL script generated by the process filling unit 114.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

Although the invention has been described through several preferred embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

**Claims**

1.  A method for converting a web service composition logic, comprising:

    obtaining a first process of the composition logic of a web service;
    generating a framework process according to the first process of the composition logic of the web service; and
    generating a second process of the composition logic of a web service according to the framework process.

2.  The method according to claim 1, wherein
    the framework process is a Directed Acyclic Graph, DAG, framework process; and
    the generating the second process of the composition logic of a web service according to the framework process comprises:

    obtaining independent path groups according to the DAG framework process;
    analyzing and processing the independent path groups to generate the second framework process of the composition logic of the web service; and
    filling the second framework process of the composition logic of the web service to generate the second process of the composition logic of the web service.

3.  The method according to claim 2, wherein the obtaining independent path groups according to the DAG framework process comprises:

    grouping the paths of the DAG framework process; and
    combining the path groups based on the path grouping result to obtain the independent path groups.

4.  The method according to claim 2, wherein the obtaining the first process of the composition logic of the web service comprises:

    retrieving the process-related information of the composition logic of the web service, combining such process-related information into the first process of the composition logic of the web service, the process-related information comprising the Sequence operation , Flow operation, and source attribute and destination attribute in assign operation .

5.  The method according to claim 4, wherein the process-related information of the composition logic of the web service is retrieved by extensible Markup Language (XML) parser.

6.  The method according to claim 2, wherein the generating the framework process according to the first process of the composition logic of the web service comprises:

    constructing the DAG description according to the first process of the composition logic of the web service; and
    generating the DAG framework process according to the DAG description.

7.  The method according to claim 5, wherein the generating the framework process according to the first process of the composition logic of the web service comprises:

    judging a source attribute and a destination attribute of each assign element in the first process of the composition logic of the web service; and
    marking the source attribute as NULL, if the source attribute of the assign element is input by the user; or
    adding the source attribute into the DAG description, and recording the parent attribute of the source attribute as NULL, if the source attribute is not input by the user and is not in the DAG description; or
    adding the destination attribute into the DAG description, and adding the source attribute into its parent attribute, if the destination attribute of the assign element is not in the DAG description; or

adding the source attribute into its parent attribute, if the destination attribute is in the DAG description.

8. The method according to claim 2, wherein the analyzing and processing the independent path groups to generate the second framework process of the composition logic of the web service comprises:

judging the grouping result of the independent path groups;
obtaining the corresponding sequence information and nodes according to the independent path groups; and generating the second framework process of the composition logic of the web service according to the sequence information and nodes.

9. The method according to claim 8, wherein the judging the grouping result of the independent path groups comprises:

if there is only one independent path group, obtaining the corresponding sequence information and nodes according to the independent path group;
if the number of the combined independent path groups is 2 or more than 2, outputting the parallel information, and analyzing and processing the remaining subpaths.

10. The method according to claim 3, wherein the grouping the paths of the DAG framework process comprises applying the depth-first-traversal method to the DAG composition logic to obtain all path groups from the head node to the end node.

11. The method according to claim 8, wherein the obtaining the corresponding sequence information and nodes according to the independent path groups comprises:

if there is one independent path group, sequentially outputting the corresponding sequence information and nodes;
if there are 2 or more than 2 independent path groups, performing recursion and analyze and process for all the sub-paths, and outputting the sequence information and nodes.

12. The method according to claim 8, wherein the obtaining the corresponding sequence information and nodes according to the independent path groups comprises:

if all paths have a same head node or a same end node, outputting the same node first, and deleting the same node in all paths, judging the remaining sub-paths, if there is one independent path group in the remaining subpath, outputting the sequence information and nodes, if there is more than one independent path group in the remaining sub-path, outputting the parallel information for each independent path group and analyzing and processing;
if neither the head node nor the end node is the same, grouping the nodes hierarchically, retrieving all head nodes whose in-degree is 0 and concurrently outputting such head nodes to the flow tag description, indicating parallel execution of all the services represented by the nodes whose in-degree is 0; judging the subpaths set without the head nodes, if there is one independent path group in the remaining subpath, outputting the sequence information and nodes, if there is more than one independent path group in the remaining sub-path, outputting the parallel information for each independent path group and analyzing and processing.

13. The method according to claim 2, wherein
the method further comprises obtaining the non-process information of the existing web service composition logic; and the filling the second framework process of the composition logic of the web service comprises: filling the framework process with the non-process information to generate the second process of the composition logic of the web service.

14. The method according to any one of claims 1-13, wherein the method further comprises:

verifying the framework process, and if the verification succeeds, obtaining the independent path groups according to the framework process.

15. The method according to claim 14, wherein the step of verifying comprises:

if only one independent node or node set exists in the framework process, the verification succeeds; or
if the framework process includes no loop, the verification succeeds; or

if the in-degree of a node in the framework process is 0, the verification succeeds; or
if the out-degree of a node in the framework process is 0, the verification succeeds.

16. A method for converting a web service composition logic, wherein the web service composition logic is a Business Process Execution Language, BPEL, composition logic of web services, and the method comprises:

    obtaining a process of the BPEL composition logic of a web service; and
    generating a framework process according to the process of the BPEL composition logic of web services.

17. The method according to claim 16, wherein the framework process is a Directed Acyclic Graph, DAG, framework process;
    the generating a framework process according to the process of the BPEL composition logic of web services comprises:

    constructing the DAG description according to the process of the BPEL composition logicofweb services; and
    generating the DAG framework process according to the DAG description.

18. The method according to claim 17, wherein the constructing the DAG description according to the process of the BPEL composition logic of web services comprises:

    judging a source attribute and a destination attribute of each assign element in the process of the BPEL composition logic of web services; and
    marking the source attribute as NULL, if the source attribute of the assign element is input by the user; or
    adding the source attribute into the DAG description, and recording the parent attribute of the source attribute as NULL, if the source attribute is not input by the user and is not in the DAG description; or
    adding the destination attribute into the DAG description, and adding the source attribute into its parent attribute, if the destination attribute of the assign element is not in the DAG description; or
    adding the source attribute into its parent attribute, if the destination attribute is in the DAG description.

19. A method for converting a web service composition logic, wherein the web service composition logic is a DAG composition logic of web services, and the method comprises:

    obtaining independent path groups according to the DAG composition logic;
    analyzing and processing the independent path groups to generate a second framework process of the composition logic of the web service; and
    filling the second framework process of the composition logic of the web service to generate the second process of the composition logic of the web service.

20. The method according to claim 19, wherein the obtaining independent path groups according to the DAG composition logic comprises:

    grouping the paths of the DAG composition logic; and
    combining the path groups based on the path grouping result to obtain the independent path groups.

21. The method according to claim 19, wherein the analyzing and processing the independent path groups to generate the second framework process of the composition logic of the web service comprises:

    judging the grouping result of the independent path groups;
    obtaining the corresponding sequence information and nodes according to the independent path groups; and
    generating the second framework process of the composition logic of the web service according to the sequence information and nodes.

22. The method according to claim 21, wherein the judging the grouping result of the independent path groups comprises:

    obtaining the corresponding sequence information and nodes according to the independent path group, if there is only one independent path group,
    outputting the parallel information, and analyzing and processing the remaining subpaths if the number of the combined independent path groups is 2 or more than 2.

**23.** The method according to claim 20, wherein the grouping the paths of the DAG composition logic comprises applying the depth-first-traversal method to the DAG composition logic to obtain all path groups from the head node to the end node.

**24.** The method according to claim 21, wherein the obtaining the corresponding sequence information and nodes according to the independent path groups comprises:

sequentially outputting the corresponding sequence information and nodes, if there is one independent path group; or
performing recursion and analyzing and processing for all the sub-paths, and outputting the sequence information and nodes, if there are 2 or more than 2 independent path groups.

**25.** The method according to claim 21, wherein the obtaining the corresponding sequence information and nodes according to the independent path groups comprises:

if all paths have a same head node or a same end node, outputting the same node first, and delete the same node in all paths, judging the remaining subpaths, and if there is one independent path group in the remaining sub-path, outputting the sequence information and nodes, if there is more than one independent path group in the remaining sub-path, outputting the parallel information for each independent path group and analyzing and processing;
if neither the head node nor the end node is the same, group the nodes hierarchically, retrieving all head nodes whose in-degree is 0 and concurrently outputting such head nodes to the flow tag description, indicating parallel execution of all the services represented by the nodes whose in-degree is 0; judging the subpaths set without the head nodes, if there is one independent path group in the remaining sub-path, outputting the sequence information and nodes, if there is more than one independent path group in the remaining sub-path, outputting the parallel information for each independent path group and analyzing and processing.

**26.** An application server, comprising a central processor, wherein the application server further comprises:

a process retrieving unit, adapted to retrieve the first process of the composition logic of a web service from the existing web service composition logic;
a process processing unit, adapted to generate a framework process according to the first process of the composition logic of the web service obtained by the process retrieving unit; and
a process generating unit, adapted to perform operations according to the framework process generated by the process processing unit, and generate the second process of the composition logic of a web service.

**27.** The application server according to claim 26, wherein
the framework process generated by the process processing unit is a DAG framework process; and
the application server comprises:

a path grouping unit , adapted to group the paths for the DAG framework process;
the process generating unit , adapted to generate the second framework process of the composition logic of the web service according to the DAG framework process; and
a process filling unit , adapted to fill the second framework process of the composition logic of the web service to generate the second process of the composition logic of the web service.

**28.** The application server according to claim 27, wherein the application server further comprises a composition logic storing unit , adapted to store the composition logic, and send the composition logic to the process retrieving unit or the process generating unit in response to the request of the process retrieving unit or the process generating unit .

**29.** The application server according to claim 27, wherein the application server further comprises a process verifying unit , adapted to verify the DAG framework process and generate the second framework process of the composition logic of the web service according to the DAG framework process if the verification succeeds.

**30.** The application server according to claim 27, wherein the process generating unit comprises:

a path group combining module and a framework generating module;
the path group combining module is adapted to combine the paths to obtain independent path groups;

the framework generating module is adapted to obtain the corresponding sequence information and nodes according to the independent path groups and generate the second framework process of the composition logic of the web service according to the sequence information and nodes.

31. An application server, comprising a central processor, wherein the application server further comprises:

a process retrieving unit, adapted to retrieve the process of the composition logic of an existing web service; and
a process processing unit, adapted to generate a framework process according to the process of the composition logic of the web service.

32. The application server according to claim 31, wherein the application server further comprises a composition logic storing unit 103, adapted to store the composition logic, and send the composition logic to the process retrieving unit in response to the request of the process retrieving unit.

33. The application server according to claim 31, wherein the process retrieving unit is adapted to obtain non-process information of the composition logic of the web service and send to the composition logic storing unit to store.

34. An application server, comprising a central processor, wherein the application server further comprises:

a path grouping unit, adapted to group the paths according to a DAG framework process;
a process generating unit, adapted to analyze the DAG framework process to generate a framework process of the composition logic of a web service; and
a process filling unit, adapted to fill the framework process of the composition logic of the web service to generate the process of the composition logic of the web service.

35. The application server according to claim 34, wherein the process generating unit comprises:

a path group combining module, adapted to combine the paths to obtain independent path groups; and
a framework generating module, adapted to obtain the corresponding sequence information and nodes according to the independent path groups and generate the second framework process of the composition logic of the web service according to the sequence information and nodes.

1    $e_{1,2}$    **ws 1**    $e_{1,3}$

**ws 2**     $e_{3,4}$    **ws 3**    $e_{3,5}$

2

**ws 4**     **ws 5**

3    $e_{2,7}$     $e_{4,6}$     $e_{5,6}$

**ws 6**

4      $e_{6,7}$

**ws7**

5

FIG. 1

$$ws_1 \rightarrow \left\{ \begin{array}{c} ws_2 \\ ws_3 \end{array} \right\} \rightarrow \left\{ \begin{array}{c} ws_4 \\ ws_5 \end{array} \right\} \rightarrow ws_6 \rightarrow ws_7$$

(a)

$$ws_1 \rightarrow \left\{ \begin{array}{c} ws_2 \\ ws_3 \rightarrow \left\{ \begin{array}{c} ws_4 \\ ws_5 \end{array} \right\} \rightarrow ws_6 \end{array} \right\} \rightarrow ws_7$$

(b)

FIG. 2

FIG. 3

FIG. 4

Process generating

534: Recursion

51 — Path grouping

52 — Path group combining

DAG composit ion logic

composition logic repository

Verification

50

531: Grouping judgment —Multiple groups→ 533: Recursion

Single group

More groups

532: Categorization
- Type-A processing
- Type-B processing
- Type-C processing
- Type-D processing

-Sequence-

Flow

535: Result collation

53

BPEL process framework

54: Process filling

BPEL script

BPEL execution engine

FIG.5

⇒ Data flow

FIG.6

FIG. 7

| Independent path group 1 | 2-3 |
|---|---|
| Independent path group 2 | 4-5-7 4-6-7 |

FIG. 8

FIG. 9

FIG. 10

FIG. 11

# INTERNATIONAL SEARCH REPORT

| International application No. |
| --- |
| PCT/CN2009/070377 |

**A. CLASSIFICATION OF SUBJECT MATTER**

H04L29/08 (2006.01) i

According to International Patent Classification (IPC) or to both national classification and IPC

**B. FIELDS SEARCHED**

Minimum documentation searched (classification system followed by classification symbols)

IPC: H04L, G06F

Documentation searched other than minimum documentation to the extent that such documents are included in the fields searched

Electronic data base consulted during the international search (name of data base and, where practicable, search terms used)

CNPAT, CNKI, WPI, EPODOC, PAJ: WEB, BPEL, DAG, service, composit+, synthes+

**C. DOCUMENTS CONSIDERED TO BE RELEVANT**

| Category* | Citation of document, with indication, where appropriate, of the relevant passages | Relevant to claim No. |
| --- | --- | --- |
| PX | CN101257452A (HUAWEI TECHNOLOGY CO LTD ) 17 Sep. 2008 (17.09.2008) description page 4 line 4 - page 28 the last line, figs. 1-11 | 1-35 |
| X | CN1996356A (UNIV HUAZHONG SCI & TECHNOLOGY) 11 July 2 007(11.07.2007) description page 3 line 6 - page 11 line 9, figs. 1-7 | 1, 14-16, 19, 26, 31-33 |
| A | CN1764183A (UNIV XIAN JIAOTONG ) 26 Apr. 2006 (26.04.2006) the whole document | 1-35 |
| A | CN1828532A (ECLARUS BEIJING SOFTWARE LL) 06 Sep. 2006 (06.09.2006) the whole document | 1-35 |
| A | US2005/0096960A1 (Plutowski et al.) 05 May 2005 (05.05.2005) the whole document | 1-35 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 May 2009 (04.05.2009) | |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI Long Telephone No. (86-10)62411331 |

Form PCT/ISA/210 (second sheet) (April 2007)

## INTERNATIONAL SEARCH REPORT
Information on patent family members

| | International application No. |
|---|---|
| | PCT/CN2009/070377 |

| Patent Documents referred in the Report | Publication Date | Patent Family | Publication Date |
|---|---|---|---|
| CN101267452A | 17.09.2008 | None | |
| CN1996356A | 11.07.2007 | None | |
| CN1764183A | 26.04.2006 | None | |
| CN1828532A | 06.09.2006 | None | |
| US2005/0096960A1 | 05.05.2005 | None | |

Form PCT/ISA/210 (patent family annex) (April 2007)

**EP 2 175 611 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810065727